# EUROPEAN PATENT APPLICATION

(11) **EP 2 416 609 A1**
(43) Date of publication of application: **08.02.2012**
(21) Application number: 10290437.2
(22) Date of filing: 02.08.2010
(51) Int. Cl.: H04W 52/02, H04W 84/04

(54) **A wireless telecommunications network, and a method of switching a small cell base station between an active state and a dormant state**

(71) Applicant: Alcatel Lucent, 75007 Paris (FR)
(72) Inventor: Ashraf, Imran, Swindon, SN5 5AA Wiltshire (GB); Boccardi, Federico, Swindon, SN1 3PH Wiltshire (GB)
(74) Representative: Sarup, David Alexander

(57) **Abstract**

A method is provided of switching a small cell base station for wireless telecommunications between an active state and a dormant state, the small cell base station lying within the coverage area of a macrocell base station in a telecommunications network. The base stations are both connected to a controller in the network. The method comprises the controller receiving a report via the macrocell base station of the location of a user terminal. Also, the controller determining whether the small cell base station is within a threshold distance of the location of the user terminal by inspecting a record of locations of small cell base stations. Dependent upon the result of the determination and the state of the small cell base station, the controller sending a control command to the small cell base station to change state.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the terms small cells and femtocells interchangeably and generically for cells that are smaller than macrocells.

One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug-and play deployment by users, for example in which femto base stations may integrate themselves into an existing macrocell network so as to connect to the core network of the macrocell network.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. An alternative to such a wired broadband backhaul is to have a wireless backhaul.

The femtocell base station also includes a radio frequency (RF) transceiver connected to an antenna for radio communications.

Femtocell base stations are sometimes referred to as femtos.

One problem of femtocell base stations is how to control energy consumption, for example for reasons of environmental sustainability, in particular in view of expected large-scale deployment in the future. For example, one study predicts that within a couple of years, by the end of 2012, say 36 million femtocell base stations will be deployed worldwide. Assuming that each one consumes 12 Watts, which is equivalent to approximately 105 Kilo Watt hours (KWh) in a year, the total power consumption would be approximately 4 x 10⁹ KWh each year. Depending how the power is produced, this could be responsible for 2 million tonnes of CO₂ per year.

A known approach to the reduction of energy consumption by femtocell base stations is described in the paper by Asraf I, Ho L T W, and Claussen H entitled "Improving Energy Efficiency of Femtocell Base Stations via User Activity Detection", Proceedings of the IEEE WCNC, Sydney Australia, April 2010. This relates to a femtocell base station that disables its pilot transmissions and associated radio processing, when no active calls are being made by users in the vicinity, be they registered or unregistered users. This is achieved by providing a low power "sniffer" function in the femto that enables detection of an active call between a macrocell base station and a user terminal. When a user terminal located within the coverage area of the femto makes a call connection to the macrocell, the sniffer detects a rise in the received power on the uplink frequency band. If this rise, which may be considered a noise rise, exceeds a predetermined threshold, the user terminal that is detected is deemed to be close enough to be potentially covered by the femtocell. The rise is detectable since the user terminal transmits at reasonably high power to the macrocell while being located close to the femto.

Further background is provided in Agenda Item 17.1.2. from Mitsubishi Electric entitled "Energy saving for HeNBs" for 3GPP TSG RAN WG3 Meeting #68 10th-14th May 2010.

### Summary

The inventors of the present application realised that a different approach was possible. The reader is referred to the appended independent claims. Some preferred features are laid out in the dependent claims.

An example of the present invention is a method of switching a small cell base station for wireless telecommunications between an active state and a dormant state, the small cell base station lying within the coverage area of a macrocell base station in a telecommunications network. The base stations are both connected to a controller in the network. The method comprises the controller receiving a report via the macrocell base station of the location of a user terminal. Also, the controller determines whether the small cell base station is within a threshold distance of the location of the user terminal by inspecting a record of locations of small cell base stations. Dependent upon the result of the determination and the state of the small cell base station, the controller sending a control command to the small cell base station to change state.

The controller is preferably in the core network, or is preferably a node in the core network, of the telecommunications network.

Some preferred embodiments provide effective energy management by enabling core network control of states of femtos. In some embodiments, available user terminal location information is used to control each of collocated femtos as to whether to take an active state in which pilot transmissions are made or a dormant state in which pilot transmissions are not made. The femtos may be private access or public access.

In some embodiments pilot transmissions are not made when there is no user terminal in the femtocell. In some embodiments, pilot transmissions are not made when the femto does not need to support an active call with a user terminal. Furthermore, in some embodiments upon the small cell base station being in active state and a call connection from the user terminal expiring, a timer is started of a time-out period, and upon the time-out period expiring without a further call connection establishment to a user terminal, the small cell base station is changed to dormant state.

In some preferred embodiments, energy consumption is reduced as compared to prior art approaches. As time is spent in a dormant state, electromagnetic exposure of end-users is reduced as is the likelihood of unnecessary signalling by a femto with user terminals that are undesired by that femto. Furthermore, in the dormant state, interference to neighbouring cells is reduced.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 shows in more detail a femtocell base station,
Figure 4 is a state transition diagram illustrating the possible states of the femtocell base station,
Figure 5 is a flow chart illustrating how the user terminal informs the core network of user terminal location,
Figure 6 is a diagram illustrating further detail of the example femtocell base station deployment shown in Figure 2,
Figure 7 is a flow chart indicating the procedure undertaken in the core network (when there are periodic location updates from user terminals) to instruct a femto to change to the awake state,
Figure 8 is a flow chart indicating the procedure undertaken in the core network (when there are periodic location updates from user terminals) to instruct a femto to change to the asleep state,
Figure 9 is a flow chart indicating the procedure undertaken in the core network to instruct a femto to change to an awake state (when triggered by a single location update from a user terminal) in a second embodiment of the invention, and
Figure 10 is a flow chart indicating the procedure undertaken in the core network to instruct a femto to change to an asleep state (when triggered by a single location update from a user terminal) in the second embodiment of the invention.

### Detailed Description

We now describe a network including femtocell base stations then look in greater detail at femtos transiting between awake and asleep states under core-network control.

### Network

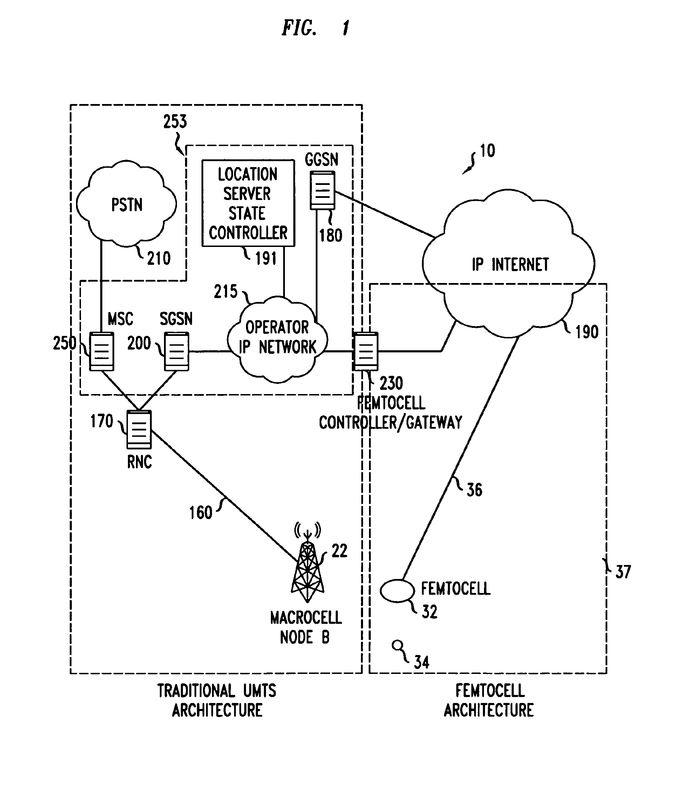

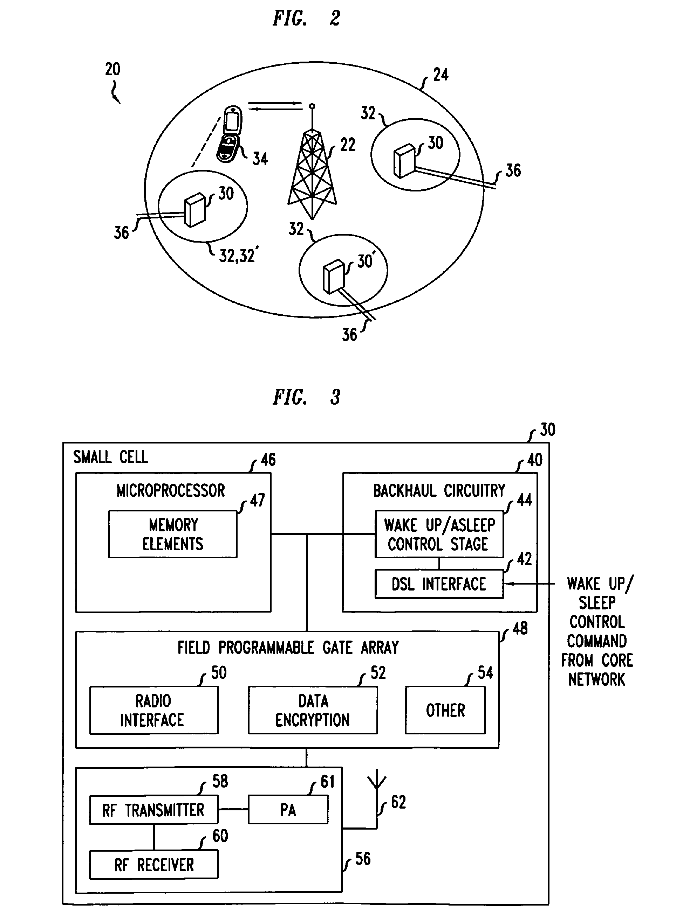

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with service general packet radio service support nodes (SGSNs) 220 and a gateway general packet radio support node (GGSN) 180. The GGSN then communicates with a packet-switch core 190 such as, for example, the Internet.

The SGSN 220 and GGSN 180 are connected by an operator IP network 215 to a femtocell controller/gateway 230. There is a location server/state controller 191 connected via the operator IP network to the femto controller/gateway. The location server/state controller acts to record user terminal's locations reported by user terminals and to control the states of femtos as explained in more detail below.

The MSC 250, SGSN 220, GGSN 180, location server/state controller 191 and operator IP network 215 constitute a so-called core network 253.

The femtocell controller/gateway 230 is connected via the Internet 190 to the femtocell base stations 32. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Femtocell base stations

As shown in Figure 3, each femto 30 includes backhaul circuitry 40 that includes a Digital Subscriber Line (DSL) interface 42 connected to an awake/asleep control stage 44. The control stage 44 is connected to the microprocessor 46 and Field Programmable Gate Array (FPGA) 48 of the femto. The microprocessor 46 includes a local memory 47. The FGPA includes a radio interface 50, data encryption stage 52 and other circuitry 54. The FPGA is connected to a radio transceiver 56 including an RF transmitter 58 and RF receiver 60, the transmitter being connected to a power amplifier 61. The transceiver includes a radio antenna 62.

### Switching between Femto states

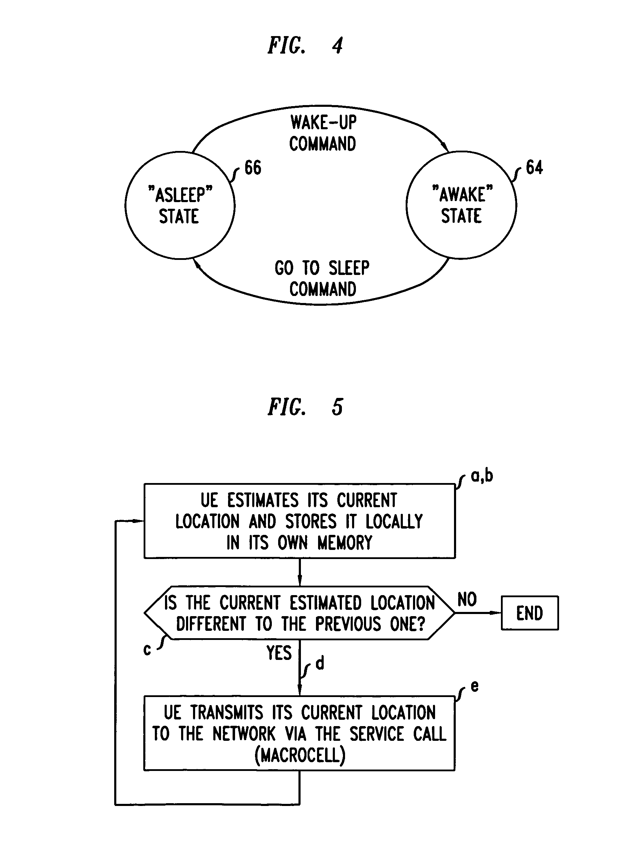

As shown in Figure 4, each femto is in one of two states and may transit between them under core-network control.

There is an awake state 64 in which all electronic hardware components of the femto are switched-on, the radio interface is active and at least pilot transmissions are made. The energy consumption in this state is relatively high.

There is an asleep state 66 in which all electronic hardware components of the femto are switched-off except for the backhaul circuitry that includes the awake/asleep control stage 44. Accordingly, the energy consumption in this state is relatively low.

In the awake state, the control stage 44 is configured to respond to a go-to-sleep command from the core network via the DSL interface 42 so as to enter the asleep state.

In the asleep state, the control stage 44 is configured to respond to a wake-up command from the core network received via the DSL interface 42 by activating the switched-off components. This can be considered a boot-up of deactivated hardware, and may take of the order of seconds or minute.

The default state of the femto is the asleep state. Control of whether each femto is in an awake state or an asleep state is undertaken by the core network as explained in more detail below.

### Estimating User terminal location

The estimation of location of a user terminal, also known as positioning, is to determine the location of a mobile user terminal within the geographical area covered by the network 10.

The user terminal runs a background process of periodically estimating its location. In this example, the user terminal receives reference signals from various femtos or macrocell base stations, and from the time delays detected is able to calculate an estimate of its location by triangulation.

In another, otherwise similar, embodiment (not shown), the estimate is the Global Positioning System (GPS) location determined from receiving GPS satellite signals. In yet another, otherwise similar, embodiment (not shown) a cellular-network-aided GPS (Assisted GPS) scheme is used.

Returning to the embodiment described so far with reference to Figures 1 to 4, the user terminal frequently estimates and reports its current estimated location to the network even when it is not in an active call. In this example the estimating and reporting is periodic.

In some otherwise similar embodiments (not shown), the reporting is triggered by the user terminal detecting more than a threshold change in received signal quality (Signal to Interference Noise Ratio, SINR). In some further, otherwise similar, embodiments (not shown), the reporting is triggered by the user terminal detecting more than a threshold change in its own location. (Furthermore, an alternative embodiment in which location reporting is only done upon active call connection being established will be described later).

### Location reporting frequently

How the user terminal informs the core network of user terminal location is shown in Figure 5.

As shown in Figure 5, irrespective of whether the user terminal is in call-connected, i.e. active mode, or idle-mode i.e. not in an active call, the user terminal periodically estimates (step a) its current location and stores (step b) the latest estimated location in its local memory 47. The user terminal then checks its latest location against the previous stored location to determine (step c) whether they are different. If Yes (step d), the user terminal transmits (step e) its current location estimate to the location server/state controller 191 in the core network via the serving macrocell base station. If No (step f) the process (temporarily) ends (step g).

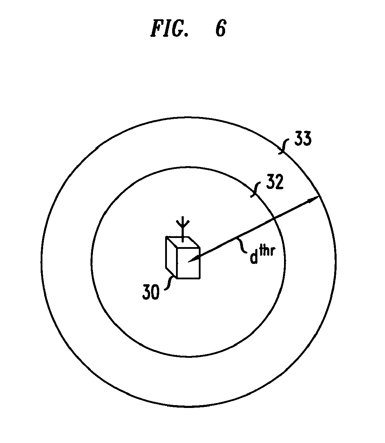

As shown in Figure 6, each femto 30 has a femtocell 32 coverage area beyond which extends a margin 33, of for example a few metres, to allow for inaccuracies in user terminal location estimation,. The overall area of femtocell 32 plus margin 33 can be considered to have a radius distance of d^{thr} (which denotes threshold distance). In this example d^{thr} is between 5 and 50 metres.

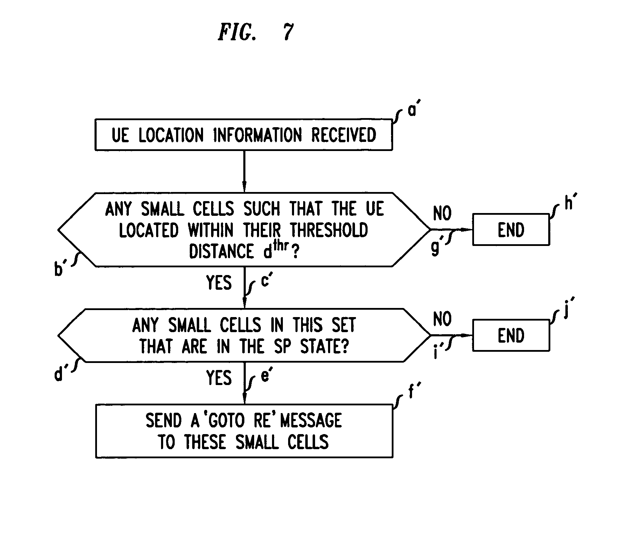

The procedure used by the location server/state controller 191 in the core network to instruct a femto to transit from the asleep state to the awake state is shown in Figure 7.

As shown in Figure 7, the user terminal's current location estimate is received (step a'). Next the core network, specifically the location server/state controller 191, determines (step b') whether any of the known-to-be-deployed femtos are within the threshold distance d^{thr} of the user terminal. The locations of the femtos are known to the core network (for example by the owner of a femto registering their postcode with the core network upon deployment of that femto). If yes (step c'), all femtos within the distance d^{thr} from the user terminal's estimated location are identified (not shown) and a query is made (step d') whether there are any femtos in the identified set which are in asleep state. If yes (step e') the identified asleep state femtos are sent (step f) wake-up commands via their respective backhaul links so as to transit to awake state.

For completeness, we should mention that if the determination whether any of the known-to-be-deployed femtos within the threshold distance d^{thr} of the user terminal is No (step g') then the process ends (step h'). Also upon the query being made (step d') whether there are any femtos in the identified set which are in asleep state, if the answer is No (step i') then the process ends (step j').

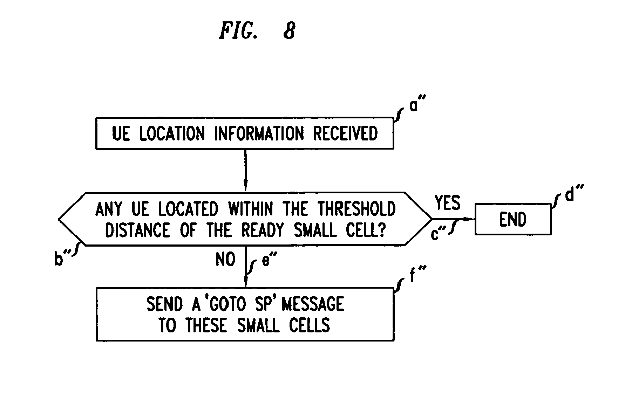

Figure 8 shows the procedure used by the core network to transit a femto from an awake state to an asleep state. As shown in Figure 8, a location estimate for a user terminal is received (step a"). Upon receiving the location estimate, a query is made (step b") whether the user terminal is still within the threshold distance d^{thr} of the femto. If yes (step c"), the process (temporarily) ends (step d"). If no (step e"), a go-to-sleep command is sent (step f'') to the femto.

In the above described embodiment location estimates are reported frequently to the core network.

In this example, the femto is activated upon a user terminal entering the area regardless of whether the user terminal is in idle-mode or call connected mode. There are still energy savings when no user terminal is present so the femto then takes the low energy asleep state.

In this example, the femto uses the same carrier frequency as the macrocell within which the femto resides. Accordingly, upon transit to the awake state the power of pilot transmissions from the femto is gradually increased over a period of a few seconds. This allows the macrocell to have sufficient time to handover the user terminal before the interference from the femto becomes so strong as to cause the call to be dropped.

In this example, transiting a femto to asleep state is only undertaken provided measurements of pilot signals from macrocell base stations by user terminals confirm that continuous radio coverage is provided by macrocells, in order to handle emergency calls. Otherwise femtos are kept in awake state.

### Location reporting only upon active call connection being established

In another embodiment essentially as described above with reference to Figures 1 to 6, location reporting to the core network, more specifically to the location server/state controller 191, is undertaken only at the time of establishing the call-/data-session to the macrocell. This is sometimes known as connection establishment. If the user terminal is not able to send a location estimate made at that time, then the user terminal sends its last previously estimated location.

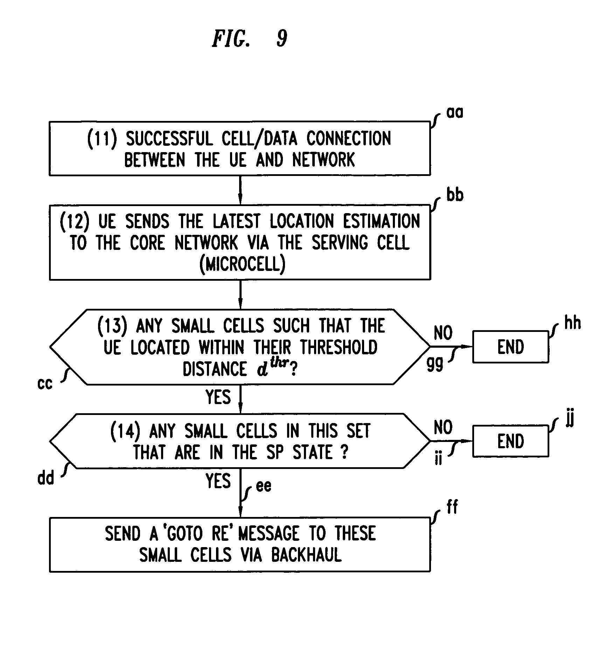

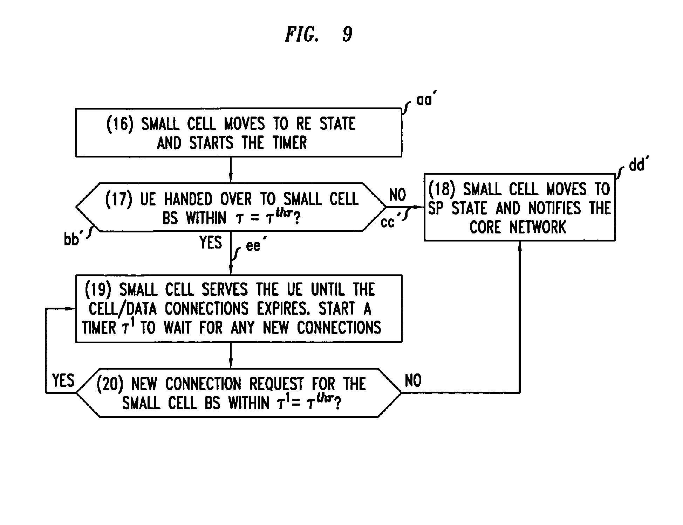

In this example, the core network responds to call-connection establishment only by determining whether the femto is within the threshold distance and so sending a command to the femto to transit to active state. The procedure for instructing a femto to transit to awake state is shown in Figure 9.

As shown in Figure 9, successful call/data connection establishment between the user terminal and the network occurs (step aa). This is in response to a paging message being transmitted (not shown) downlink to the user terminal (network-initiated session), or a connection request being sent (not shown) uplink from the user terminal (user-initiated session).The core network then acquires (step bb) the latest location estimate of the user terminal via the serving macrocell. A query is then made (step cc) as to whether the user terminal is within a threshold distance d^{thr} of any of the known to be deployed femtos, the locations of which are known to the core network. If yes (step dd), the femtos within that threshold distance of the user terminal are identified, and a query is made (step ee) whether any of the femtos in this set are in asleep state. If yes (step ee) the identified asleep state femtos are sent (step ff) wake-up commands via their respective backhaul links so as to transit to awake state.

For completeness, we should mention that if the determination whether any of the known-to-be-deployed femtos within the threshold distance d^{thr} of the user terminal is No (step gg) then the process ends (step hh). Also upon the query being made (step dd) whether there are any femtos in the identified set which are in asleep state, if the answer is No (step ii) then the process ends (step jj).

As the user terminal does not provide frequent updates as to its location, the transit from awake to asleep state is controlled by a timer as shown in Figure 10.

As shown in Figure 10, upon the femto being transited to awake state by core network control, the femto activates its deactivated hardware including the radio interface, and a timer is started (step aa'). A determination is made (step bb') as to whether the connection with the user terminal was handed over to the femto within a timeout period, namely a specified time frame τ^{thr}. Even if the user terminal is located close by to the femto, handover to that femto may not occur for a variety of reasons. One reason may be that the connection with the user terminal is dropped by the macrocell before the femto wakes up. Another reason may be that there is an error in location estimate for the user terminal so that the user terminal in reality lies outside the threshold distance d^{thr}. A third reason may be that the user terminal is instead handed over to another collocated femto

If No (step cc') i.e. the connection with the user terminal was not handed over to that femto, the femto transits (step dd') to asleep state so as to conserve energy, and notifies the core network of going to asleep state.

If Yes (step ee') i.e. the connection with the user terminal is handed over to the femto within the time-out period, then the connection between the femto and the user terminal is maintained (step ff') until the connection expires. Upon that expiry, the user terminal does not transit to asleep state straight away, but starts a new timer having a time-out period of τ during which the user terminal remains in awake state in case of possible new connections with user terminals.

In this example, a femto is only transited to awake state from asleep state at the time of call connection establishment. This means that the femto remains in the low energy asleep state most of the time, including when the user terminal is in the femtocell but is in idle-mode (as opposed to being call connected). Accordingly the femto uses relatively little energy.

In this example, the femto uses the same carrier frequency as the macrocell within which the femto resides. Accordingly, upon transit to the awake state the power of pilot transmissions from the femto is gradually increased over a period of a few seconds. This allows the macrocell to have sufficient time to handover the user terminal before the interference from the femto becomes so strong as to cause the call to be dropped.

In this example, transiting a femto to asleep state is only undertaken provided measurements of pilot signals from macrocell base stations by user terminals confirm that continuous radio coverage is provided by macrocells, in order to handle emergency calls. Otherwise femtos are kept in awake state.

The present invention may be embodied in other specific forms without departing from its essential characteristics. For example, in a telecommunications network of 3GPP Long Term Evolution (LTE) type, the femto state control is undertaken by the Mobility Management Entity (MME). The MME is a node in the LTE core network. The LTE core network is often known as System Architecture Evolution, SAE.

The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of switching a small cell base station for wireless telecommunications between an active state and a dormant state, the small cell base station lying within the coverage area of a macrocell base station in a telecommunications network, the base stations both being connected to a controller in the network, the method comprising:
the controller receiving a report via the macrocell base station of the location of a user terminal,
the controller determining whether the small cell base station is within a threshold distance of the location of the user terminal by inspecting a record of locations of small cell base stations,
dependent upon the result of the determination and the state of the small cell base station, the controller sending a control command to the small cell base station to change state.

2. A method according to claim 1, in which in the dormant state the small cell base station does not make pilot signal transmissions, and in the active state the small cell base station does make pilot signal transmissions.

3. A method according to claim 1 or claim 2, in which the small cell base station comprises a radio interface and in the dormant state the radio interface is inactive and in the active state the radio interface is active.

4. A method according to any preceding claim, in which the active state is relatively high power consuming and the dormant state is relatively low power consuming.

5. A method according to any preceding claim, in which upon determining that the small cell base station is within the threshold distance of the location of the user terminal and is in the dormant state, the small cell base station is commanded to change to the active state.

6. A method according to any preceding claim, in which the threshold distance is greater than the small cell coverage area radius.

7. A method according to any preceding claim in which the controller receives periodic reports of the location of the user terminal, and periodically determines whether the small cell base station is within the threshold distance so as to control the state of the small cell base station.

8. A method according to any preceding claim in which in response only to call connection establishment with the user terminal, the controller both determines that the small cell base station is within the threshold distance and sends a control command to the small cell base station to change to the active state.

9. A method according to any preceding claim, in which upon determining that the small cell base station is further than the threshold distance from locations of user terminals and is in the active state, the small cell base station is commanded to change to the dormant state.

10. A method according to any preceding claim, in which the controller comprises a node in a core network of the telecommunications network.

11. A controller configured to switch a small cell base station that lies within the coverage area of a macrocell base station between an active state and a dormant state, the controller being connected in use to both the macrocell base station and the small cell base station,
the controller being configured to receive a report via the macrocell base station of the location of the user terminal,
the controller being configured to determine whether the small cell base station is within a threshold distance of the location of the user terminal by inspecting a record of locations of small cell base stations,
the controller being configured to, dependent upon the result of the determination and the state of the small cell base station, send a control command to the small cell base station to change state.

12. A controller according to claim 11, configured to command the small cell base station to change to the active state upon determining that the small cell base station is within the threshold distance of the location of the user terminal and the small cell base station is in the dormant state.

13. A controller according to claim 11 or claim 12, in which the controller receives periodic reports of the location of the user terminal, and periodically determines whether the small cell base station is within the threshold distance so as to control the state of the small cell base station.

14. A controller according to any of claims 11 to 13, in which in response only to call connection establishment with the user terminal, the controller both determines that the small cell base station is within the threshold distance and sends a control command to the small cell base station to change to the active state.

15. A wireless telecommunications network comprising the controller according to any of claims 11 to 14, the macrocell base station and the small cell base station.
